# EUROPEAN PATENT APPLICATION

(11) **EP 3 001 586 A1**
(43) Date of publication of application: **30.03.2016**
(21) Application number: 14186913.1
(22) Date of filing: 29.09.2014
(51) Int. Cl.: H04B 10/80

(54) **Optical communication system**

(71) Applicant: ALCATEL LUCENT, 92100 Boulogne-Billancourt (FR)
(72) Inventor: Shen, Alexandre, 91767 PALAISEAU (FR); Urie, Alistair, 91620 NOZAY (FR)
(74) Representative: Cabinet Camus Lebkiri

(57) **Abstract**

An embodiment of the invention relates to an optical communication system (1) comprising:
- a first optical transceiver (2) arranged and constructed to transmit data signal over a first optical link (8¹) to a second optical transceiver (3) of a remote system (4), and to receive data signal over said first optical link (8¹) from said second optical transceiver (3),
- an optical power source (5) arranged and constructed to transmit energy-transporting optical signal over a second optical link (8²) to the remote system (4),
- a photovoltaic cell (7) arranged and constructed to convert received energy-transporting optical signal into electrical current. , said photovoltaic cell (7) being arranged and constructed to supply said remote system (4).

## Description

### TECHNICAL FIELD

The present invention pertains to an optical communication system adapted to use optical communication link (by instance, optical fiber or free space optical communication systems in which there's no fiber) to simultaneously or separately transmit and receive information and transport energy to remote devices.

### BACKGROUND

Remote communicating devices must be supplied with electrical power. In several domains of applications, such as the internet of Things, the Radio Access Networks, or Remote Sensor Networks, especially in embarked systems, electrical lines are added to electrical power supply remotes communicating devices. Those supplemental electrical lines add extra weight, extra cost and are vulnerable to electromagnetic interference. Thus, those electrical lines become a serious limiting factor in system deployment.

### SUMMARY

Accordingly, the purpose of the present invention is to propose an optical communication system which avoids the need for electrical power feed to offer an economic and technically easy to deploy solution.

To achieve these advantages, and in accordance with the purpose of the invention as embodied, in a not limited embodiment, the present invention provides an optical communication system comprising:
- a first optical transceiver arranged and constructed to transmit data signal over at least a first optical link to a second optical transceiver of a remote system, and to receive data signal over said at least first optical link from said second optical transceiver,
- an optical power source arranged and constructed to transmit energy-transporting optical signal over at least a second optical link to the remote system,
- a photovoltaic cell arranged and constructed to convert received energy-transporting optical signal into electrical current, said photovoltaic cell being arranged and constructed to supply said remote system.

Thanks to the invention, it doesn't need any non-rechargeable electric batteries or electrical lines for the remote system because the energy required to power its functionality is supplied optically. This permits to facilitate the deployment of optical system in embarked systems, such as military or civil aviation, remotely controlled mini-robots networks or sensor networks in dangerous and/or difficult to reach environment (nuclear irradiated zones, high electrical fields, mines, catastrophe areas, within buildings, etc.).

In addition to the main features aforementioned in the previous paragraph, the optical communication system according to the invention may also have one or more of the additional features below, taken individually or in any technically feasible combination.

In a not limited embodiment, the first optical link is an optical fiber, and/or the second optical link is an optical fiber.

In a not limited embodiment, the optical communication system further comprises:
- a first optical coupler arranged and constructed to merge the data signal transmitted from the first optical transceiver with the energy-transporting optical signal transmitted from the optical power source,
- a third optical link connected to the first optical coupler and to a second optical coupler, the second optical coupler being arranged and constructed to separate the data signal from the received energy-transporting optical signal.

In a not limited embodiment, the optical communication system further comprises:
- a first optical coupler arranged and constructed to merge the data signal transmitted from the first optical transceiver with the energy-transporting optical signal transmitted from optical power source,
- a photosensive device comprising the second optical transceiver and the photovoltaic cell, and
- an electronic circuit arranged and constructed to adapt the impedance of the photosensive device so that:
   o said photosensive device behaves like the photosensive cell when the impedance of the electronic circuit is high, and
   o said photosensive device behaves like the optical second transceiver when the impedance of the electronic circuit is low.

In a not limited embodiment, the electronic circuit is furthermore arranged and constructed like an electronic switch, so that:
- when the impedance of the electronic circuit is high said electronic circuit lets the energy electrical signal go into a capacitor device to store electric energy,
- when the impedance of the electronic circuit is low said electronic circuit lets the electrical signal energy go into a functionalities box.

In a not limited embodiment, the capacitor device is formed by:
- an electronic circuit arranged and constructed to store electric energy, and
- an electrical current distribution circuit arranged and constructed to power the photosensive device when the photosensive device is in a data signal receiving mode and/or the functionalities box.

In a not limited embodiment, the first optical transceiver is located in a central office.

In a not limited embodiment, the optical communication system further comprises a central node comprising the optical power source, the optical power source being adapted and constructed to transmit energy-transmitting optical signal to a plurality of remote system, for each remote system the optical power source being adapted to transmit energy-transmitting optical signal via a second optical link.

In a not limited embodiment, a first coupler is located into the central node, the first optical coupler being arranged and constructed to merge the data signal transmitted from the first optical transceiver with the energy-transmitting optical signal in order to transmit the data signal with the energy-transmitting optical signal to a plurality of remote system, for each remote system the first optical coupler being adapted to transmit the energy-transmitting optical signal via a third optical link.

In a not limited embodiment, the central node is located in the central office.

In a not limited embodiment, the central node is located remotely from the central office.

### BRIEF DESCRIPTION

Other characteristics and advantages of the present invention will become apparent upon reading the following description of embodiments, which are naturally given by way of non-limiting examples, and in the attached drawings, in which:
- Figure 1 is a schematic view showing a first embodiment of the optical communication system according to the invention,
- Figure 2 is a schematic view showing a second embodiment of the optical communication system according to the invention,
- Figure 3 is a schematic view showing a third embodiment of the optical communication system according to the invention,
- Figure 4 is a schematic view showing a fourth embodiment of the optical communication system according to the invention,
- Figure 5 is a schematic view showing a fifth embodiment of the optical communication system according to the invention,
- Figure 6 is a schematic view showing a sixth embodiment of the optical communication system according to the invention.

The same references are used in different figures to designate same elements.

### DETAILED DESCRIPTION

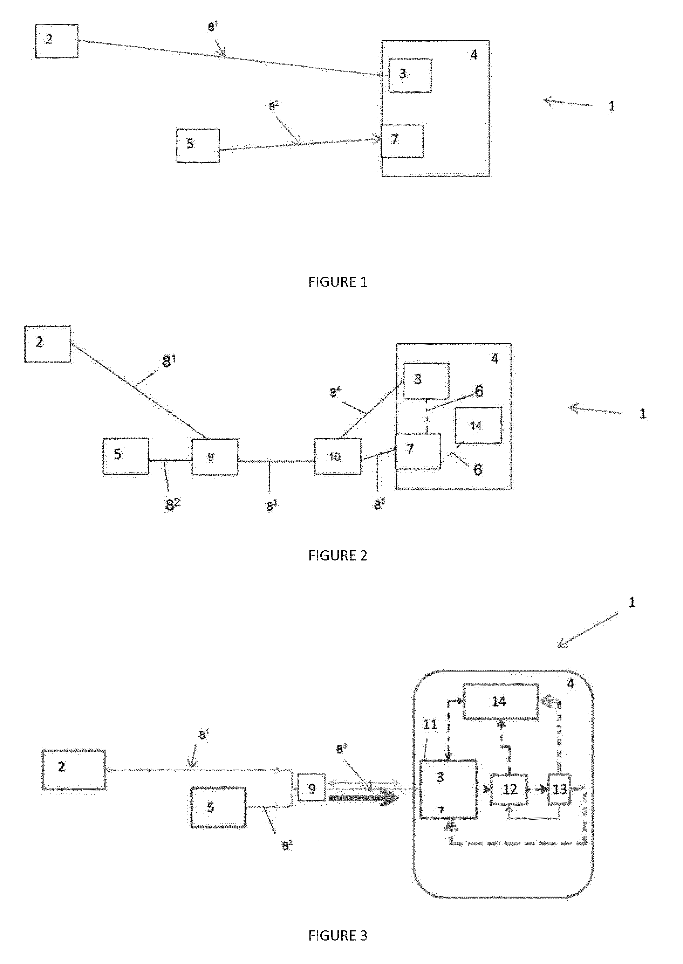

Figure 1 depicts a not limited embodiment of an optical communication system 1 according to the invention. In this example, the optical communication system 1 comprises a first optical transceiver 2 arranged and constructed to transmit data signal over a first optical link 8¹ to a second optical transceiver 3 of a remote system 4, and to receive data signal over the first optical link 8¹ from the second optical transceiver 3. In not limited embodiments, the first optical link 8¹ is an optical fiber or a free space optical link.

The remote system 4 can contain several functionalities, such as for example, sensing, measuring, signal processing and signal transmission via optical medium or via radio signal antenna for radio application. Thus, it is necessary to supply electrical energy to the remote system 4 to run all the possible functionalities. To this end, the optical communication system 1 comprises an optical power source 5 arranged and constructed to transmit energy-transporting optical signal over a second optical link 8² to the remote system 4. In not limited embodiments, the second optical link 8² is an optical fiber or a free space optical link.

Furthermore, the remote system 4 comprises a photovoltaic cell 7 arranged and constructed to convert received energy-transporting optical signal into electrical current. It could be noted that the photovoltaic cell 7 is arranged and constructed to supply the remote system 4 with electricity.

In another not limited implementation of the optical communication system 1 according to the invention is depicted in figure 2, the optical communication system 1 further comprises a first optical coupler 9 arranged and constructed to merge the data signal transmitted from the first optical transceiver 2 with the energy-transporting optical signal transmitted from the optical power source 5. In this not limited embodiment, the first optical link 8¹ is linked to the first optical transceiver 2 and to the first optical coupler 9. Besides, the second optical link 8² is linked to the optical power source 5 and to the first optical coupler 9. Thus, the first optical coupler 9 can merge the data signal transmitted from the first optical transceiver 2 with the energy-transporting optical signal transmitted from the optical power source 5. Then, the data signal and the energy-transporting optical signal can be transmitted over a third optical link 8³.

In not limited embodiments, the third optical link 8³ is an optical fiber or a free space optical link. It could be noted that the third optical link 8³ is connected to the first optical coupler 9 and to a second optical coupler 10, the second optical coupler 10 being arranged and constructed to separate the data signal from the energy-transporting optical signal received in order to transmit the data signal to the second optical transceiver 3 and the energy-transporting optical signal to the photovoltaic cell 7 arranged and constructed to convert received energy-transporting optical signal into into electrical current. Therefore, only one optical link (8³ in the example) supports both the bi-directional data signal flux and the optical energy flow. If simultaneous support for data signal transmission and energy transport is required then the two optical signals have to be of different wavelengths so that the energy flow does not perturb the data signal detection, namely by preserving the signal on noise ratio of the data. In this remote system 4, the data and the energy flow are separated by the second optical coupler 10, which can be for example a wavelength sensitive coupler such as an arrayed waveguide grating, or any other wavelength sensitive device.

The second optical coupler 10 can transmit data signal to the second optical transceiver 3 via a fourth optical link 8⁴. Further, the second optical coupler 10 can transmit the energy-transporting optical signal to the photovoltaic cell 7 via a fifth optical link 8⁵. In not limited embodiments, the fourth optical link 8⁴ is an optical fiber or a free space optical link and the fifth optical link 8⁵ is an optical fiber or a free space optical link.

Then, the energy is converted in the photovoltaic cell 7, whereas the data signal is detected in the second optical transceiver 3. The collected and converted energy is transmitted via an electrical link 6 from the photovoltaic cell 7 to the second optical transceiver 3 in order to power the second optical transceiver 3. Further, the collected and converted energy can be used to power other functionalities, which are represented by a functionalities box 14. In this case the energy is transmitted to the box 14 via a second electrical link 6.

In another not limited embodiment of the invention the data communication and energy transport processes do not occur simultaneously. In this case the photovoltaic cell 7 in figure 2 would be used to collect energy for a period of time and then the third optical fiber 8³ would be used to carry the data communications signals between optical transceiver 2 and 3. In this case both energy transportation and data communications may use the same optical wavelength.

In another not limited embodiment depicted in figure 3, the optical communication system 1 according to the invention comprises a first optical coupler 9 arranged and constructed to merge the data signal transmitted from the first optical transceiver 2 with the energy-transporting optical signal transmitted from optical power source 5.

The system 1 also comprises a photosensive device 11 comprising the second optical transceiver 3 and the photovoltaic cell 7. Thus, the photovoltaic function and the data detection function are performed by a single and same photosensive device, which is represented by the box 11 on the figure.

Furthermore, in this not limited implementation, the system 1 comprises an electronic circuit 12 arranged and constructed to adapt the impedance of the photosensive device 11 so that:
o the photosensive device 11 behaves like the photovoltaic cell 7 when the impedance of the electronic circuit 12 is high, and
o the photosensive device 11 behaves like the optical second transceiver 3 when the impedance of the electronic circuit 12 is low.

In other words, the photosensive device 11 has a double functionality: a first functionality allowing to convert the received optical signal into an electrical signal which will be fed into the core of the remote system for processing; and a second functionality allowing to convert optical energy into electrical energy, which will be fed into the remote system for battery recharging.

Thanks to these embodiments, it doesn't need any non-rechargeable electric batteries or electrical lines for the remote system because the energy required to power its functionality is supplied optically. This permits to facilitate the deployment of optical system including such dual-function receivers in embarked systems, such as military or civil aviation, remotely controlled mini-robots networks or sensor networks in dangerous and/or difficult to reach environment (nuclear irradiated zones, high electrical fields, mines, catastrophe areas, within buildings, etc.).

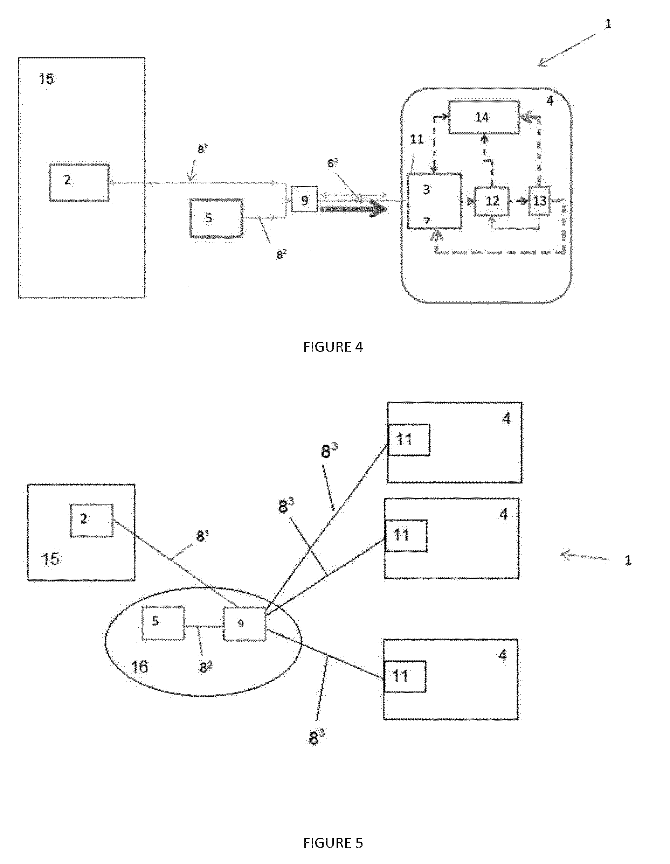

In a not limited embodiment illustrated in figure 4, the electronic circuit 12 is furthermore arranged and constructed like an electronic switch, so that:
- when the impedance of the electronic circuit 12 is high, the electronic circuit 12 lets the energy-transporting electrical signal go into a capacitor device 13 to store energy electric,
- when the impedance of the electronic circuit 12 is low, the electronic circuit 12 lets the electrical signal go into the functionalities box 14.

In a not limited embodiment, the capacitor device 13 is formed by:
- an electronic circuit arranged and constructed to store electric energy, and
- an electrical current distribution circuit arranged and constructed to power the photosensive device 11 and/or the functionalities box 14, when the photosensive device 11 is in a data signal receiving mode (i.e. when the impedance of the electronic circuit 12 is low).

In a not limited embodiment of the invention illustrated in figure 4, the first optical transceiver 2 is located in a central office 15.

In another not limited embodiment of the invention illustrated in figure 5, the system 1 comprises a central node 16 delocalized outside the central office 15.

The central node 16 comprises the optical power source 5, the optical power source 5 being adapted and constructed to transmit energy-transmitting optical signal to a plurality of remote system 4, for each remote system 4 the optical power source 5 being adapted to transmit energy-transmitting optical signal via an optical link, the optical link being formed, in the illustrated example, by the second optical link 8² and the third optical link 8³. More particularly, a first coupler 9 is located inside the central node 16, the first optical coupler 9 receiving data signal from the first optical transceiver 2 and energy-transporting optical signal from the optical power source 5. The first coupler 9 is arranged and constructed to merge the data signal with the energy-transporting optical signal in order to transmit the data signal with the energy-transporting optical signal to the plurality of remote systems 4. In other words, the basic idea is to use optical fibers 8³ to simultaneously or separately transmit/receive information and transport the energy that the remote devices 4 need to run. The remote devices 4 are linked to their central node 16 by third optical link 8³. The photovoltaic cells are used to convert the optical energy transported over optical fibers into electrical energy. This electrical energy is then used by each remote system 4 to perform different tasks, such as data collection, processing and transmission back to central office 15 (sensor network systems), uplink and downlink of radio (or radar for military applications) over fiber signals, and also radio signal emission and reception in the radio access networks.

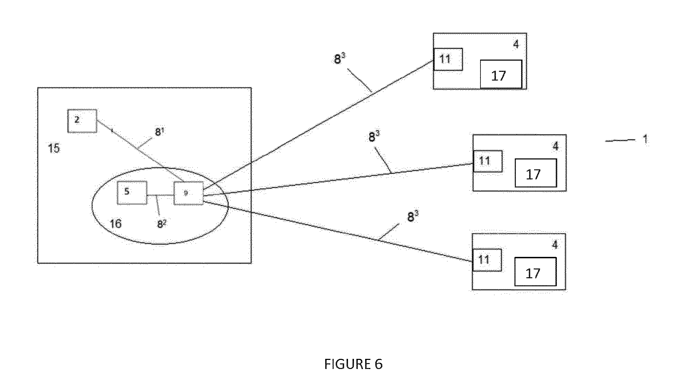

In another not limited embodiment of the invention depicted in figure 6, the central node 16 is located in the central office 15.

The invention can have very broad applications, including ZigBee or Bluetooth pico-cell radio access networks, or any network of remote sensors requiring active devices.

Naturally, the present invention is not limited to the described embodiments, but rather is subject to many variants accessible to the person skilled in the art without departing from the invention. In particular, without departing from the invention, it is possible to conceive the usage of remote devices of different structures and natures.

## Claims

1. Optical communication system (1) comprising:
- a first optical transceiver (2) arranged and constructed to transmit data signal over at least a first optical link (8¹) to a second optical transceiver (3) of a remote system (4), and to receive data signal over said at least first optical link (8¹) from said second optical transceiver (3),
- an optical power source (5) arranged and constructed to transmit energy-transporting optical signal over at least a second optical link (8²) to the remote system (4),
- a photovoltaic cell (7) arranged and constructed to convert received energy-transporting optical signal into electrical current, said photovoltaic cell (7) being arranged and constructed to supply said remote system (4).

2. Optical communication system (1) according to claim 1, wherein the first optical link (8¹) is an optical fiber, and/or the second optical link (8²) is an optical fiber.

3. Optical communication system (1) according any one of the preceding claims further comprising :
- a first optical coupler (9) arranged and constructed to merge the data signal transmitted from the first optical transceiver (2) with the energy-transporting optical signal transmitted from the optical power source (5),
- a third optical link (8³) connected to the first optical coupler (9) and to a second optical coupler (10), the second optical coupler (10) being arranged and constructed to separate the data signal from the received energy-transporting optical signal.

4. Optical communication system (1) according to any one of the preceding claims further comprising:
- a first optical coupler (9) arranged and constructed to merge the data signal transmitted from the first optical transceiver (2) with the energy-transporting optical signal transmitted from optical power source (5),
- a photosensive device (11) comprising the second optical transceiver (3) and the photovoltaic cell (7), and
- an electronic circuit (12) arranged and constructed to adapt the impedance of the photosensive device (11) so that:
o said photosensive device (11) behaves like the photosensive cell (7) when the impedance of the electronic circuit (12) is high, and
o said photosensive device (11) behaves like the optical second transceiver (3) when the impedance of the electronic circuit (12) is low.

5. Optical communication system (1) according to claim 4, wherein the electronic circuit (12) is furthermore arranged and constructed like an electronic switch, so that:
- when the impedance of the electronic circuit (12) is high said electronic circuit (12) lets the electrical energy signal go into a capacitor device (13) to store electric energy,
- when the impedance of the electronic circuit (12) is low said electronic circuit (12) lets the electrical energy signal go into a functionalities box (14).

6. Optical communication system (1) according to claim 5, wherein the capacitor device (13) is formed by:
- an electronic circuit arranged and constructed to store electric energy, and
- an electrical current distribution circuit arranged and constructed to power the photosensive device (11) when the photosensive device (11) is in a data signal receiving mode and/or the functionalities box (14).

7. Optical communication system (1) according to any of the preceding claims, wherein the first optical transceiver (2) is located in a central office (15).

8. Optical communication system (1) according to any of the preceding claims further comprising a central node (16) comprising the optical power source (5), the optical power source (5) being adapted and constructed to transmit energy-transmitting optical signal to a plurality of remote system (4), for each remote system (4) the optical power source (5) being adapted to transmit energy-transmitting optical signal via a second optical link (8²).

9. Optical communication system (1) according to claim 8 wherein a first coupler (9) is located into the central node (16), the first optical coupler (9) being arranged and constructed to merge the data signal transmitted from the first optical transceiver (2) with the energy-transmitting optical signal in order to transmit the data signal with the energy-transmitting optical signal to a plurality of remote system (4), for each remote system (4) the first optical coupler (9) being adapted to transmit the energy-transmitting optical signal via a third optical link (8³).

10. Optical communication system (1) according to claims 7, 8 or 9 wherein the central node (16) is located in the central office (15).

11. Optical communication system (1) according to claim 7, 8 or 9 wherein the central node (16) is located remotely from the central office (15).
